(19) Europäisches Patentamt
European Patent Office
Office européen des brevets

(11) EP 4 664 050 A1

(12) EUROPEAN PATENT APPLICATION
published in accordance with Art. 153(4) EPC

(43) Date of publication:
17.12.2025 Bulletin 2025/51

(51) International Patent Classification (IPC):
F28F 1/40 (2006.01)    F28F 13/02 (2006.01)
F28D 20/00 (2006.01)

(21) Application number: 23916610.1

(22) Date of filing: 30.06.2023

(52) Cooperative Patent Classification (CPC):
F28D 20/00; F28F 1/40; F28F 13/02

(86) International application number:
PCT/JP2023/024483

(87) International publication number:
WO 2024/166414 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.02.2023 JP 2023016693

(71) Applicant: Mitsubishi Materials Corporation
Tokyo 100-8117 (JP)

(72) Inventor: KAWAI, Shunsuke
Naka-shi
Ibaraki 3110102 (JP)

(74) Representative: Hoffmann Eitle
Patent- und Rechtsanwälte PartmbB
Arabellastraße 30
81925 München (DE)

(54) **METAL NET LAMINATED POROUS BODY AND POROUS BODY-CONTAINING PIPE**

(57) There are provided a wire mesh laminated porous material and pipes containing a porous material, in which wire meshes (21) are provided, wire meshes (21) an interval in between, each of apertures and line diameters of the wire meshes being identical therebetween, adjacent to each other in a lamination direction are relatively rotated and laminated, and opening lengths of the apertures of the wire meshes (21) being set in a range of 0.5 mm or more and 0.7 mm or less.

FIG. 2A

**Description**

[Technical Field]

The present invention relates to a wire mesh laminated porous material having a structure in which wire meshes are laminated, and pipes containing a porous material in which this wire mesh laminated porous material is disposed.
Priority is claimed on Japanese Patent Application No. 2023-016693, filed February 7, 2023, the content of which is incorporated herein by reference.

[Background Art]

In the related art, a metal porous material has a high specific surface area and a high opening porosity, and thus is used for a filter, an electrode assembly, a sound attenuation member, a member for heat exchange, and the like.
Here, for a metal porous material used as a matrix material in a cold accumulator or a waste heat recovery device such as a Stirling cycle device, a metal porous material having a low pressure loss and excellent heat transfer performance is required.
In a heat exchanger mounted on a pulse tube refrigerator, various structures for improving heat exchange efficiency such as cooling while increasing a flow-straightening effect of a working gas in a heat exchanger using a porous material in which wire meshes or punched plates, on which circular or square through holes are arranged and punched, are laminated.
For example, Patent Document 1 proposes a pulse tube refrigerator which uses a structure in which wire meshes having different opening lengths and wire diameters of apertures are laminated as a rectifier.
In addition, Patent Document 2 discloses a heat exchanger for improving a flow-straightening capability of a working gas and a heat exchange capability, by using a bonded porous material obtained by alternately laminating a porous material such as a metallic wire mesh and a metallic ring, using diffusion bonding by pressurization.
Furthermore, Patent Document 3 discloses a technology related to a heat exchanger of a laminate in which wire meshes having different mesh sizes and material types are laminated on one another and wire mesh contact parts are diffusion bonded.
In addition, Patent Document 4 proposes a technology for reducing a variation in a flow-straightening effect of a working gas and improving cooling efficiency by inserting a spacer for maintaining a gap between wire meshes to dispose the wire meshes with a gap.

[Citation List]

[Patent Documents]

[Patent Document 1]
Japanese Unexamined Patent Application, First Publication No. 2002-349981
[Patent Document 2]
Japanese Unexamined Patent Application, First Publication No. 2005-030704
[Patent Document 3]
Japanese Unexamined Patent Application, First Publication No. 2011-149601
[Patent Document 4]
Japanese Unexamined Patent Application, First Publication No. 2014-228171

[Summary of Invention]

[Technical Problem]

Meanwhile, as disclosed in Patent Documents 1 to 4, in a heat exchanger using a wire mesh laminated porous material having a structure in which wire meshes or the like are laminated, heat resistance of a bonding part can be reduced by sufficient adherence by diffusion bonding by pressurization. However, depending on a method for laminating the wire meshes, or a method for laminating without particularly describing an arrangement state, a fluid passes through an inside of a gap of the wire mesh without frictional resistance, and this can realize a low pressure loss, however, there was a concern that the heat exchanger has a poor heat transfer capability.
In addition, it has not been examined how much a slight position deviation of the wire mesh arrangement at the time of laminating changes performance such as a pressure loss and a heat transfer rate, and there was a concern that the position deviation of the wire mesh arrangement at the time of laminating leads to the performance change.

Further, as in Patent Documents 3 and 4, in order to laminate a plurality of wire meshes having different mesh sizes or types of metal materials, complicated preparation procedures are required, and there was a concern that man-hours or costs in manufacturing increase.

The present invention has been made based on the above circumstances, and an objective thereof is to provide a wire mesh laminated porous material which shows a high heat transfer rate and a low pressure loss even in a case where a method for laminating wire meshes is changed when laminating the wire meshes, and does not cause a fluctuation in thermal performance determined by the pressure loss and the heat transfer rate, and pipes containing a porous material.

[Solution to Problem]

In order to solve such problems to achieve the objective, in a wire mesh laminated porous material of Aspect 1 of the present invention, a plurality of wire meshes are provided with an interval in between, each of apertures and line diameters of the wire meshes being identical therebetween, wire meshes adjacent to each other in a lamination direction are relatively rotated and laminated, and opening lengths of the apertures of the wire meshes being set in a range of 0.5 mm or more and 0.7 mm or less.

According to the wire mesh laminated porous material of Aspect 1 of the present invention, the opening lengths of the apertures of the wire meshes are set in a range of 0.5 mm or more and 0.7 mm or less. Accordingly, a flowing path is ensured while maintaining excellent heat conduction between a fluid flowing through and a wire mesh line, and the collisions frequency with the wire mesh lines is less likely to be excessively changed depending on a laminating method. Therefore, performance of a high heat transfer rate and a low pressure loss is exhibited, and it is possible to make thermal performance determined by the pressure loss and the heat transfer rate not fluctuate according to a difference of the laminating method.

In addition, since the wire meshes are provided with an interval in between, each of apertures and line diameters of the wire meshes being identical therebetween, and the wire meshes adjacent to each other in the lamination direction are relatively rotated and laminated, it is possible to comparatively easily manufacture a wire mesh laminated porous material.

In the wire mesh laminated porous material of Aspect 2 of the present invention, in the wire mesh laminated porous material of Aspect 1 of the present invention, the interval between the wire meshes adjacent to each other in the lamination direction is in a range of 0.5 mm or more and 0.6 mm or less.

According to the wire mesh laminated porous material of Aspect 2 of the present invention, the interval between the wire meshes adjacent to each other in the lamination direction is set in a range of 0.5 mm or more and 0.6 mm or less. Accordingly, it is possible to realize weight reduction and size reduction, and reliably achieve a flow-straightening effect of a fluid.

In pipes containing a porous material of Aspect 3 of the present invention, the wire mesh laminated porous material according to Aspect 1 or 2 of the present invention is disposed inside a pipe body, and the wire mesh laminated porous material is disposed so that the wire meshes are laminated in an extension direction of the pipe body.

According to the pipes containing a porous material of Aspect 3 of the present invention, the wire mesh laminated porous material according to Aspect 1 or 2 of the present invention is disposed inside the pipe body. Accordingly, by causing a fluid to flow to the pipe body, it is possible to obtain high thermal performance even in a case where a method for laminating wire meshes is changed when laminating the wire meshes, and it is possible to make thermal performance determined by the pressure loss and the heat transfer rate not fluctuate according to a difference of the laminating method.

[Advantageous Effects of Invention]

According to the present invention, it is possible to provide a wire mesh laminated porous material which shows a high heat transfer rate and a low pressure loss even in a case where a method for laminating wire meshes is changed when laminating the wire meshes, and does not cause a fluctuation in thermal performance determined by the pressure loss and the heat transfer rate, and pipes containing a porous material.

[Brief Description of Drawings]

FIG. 1 is a schematic explanatory view of pipes containing a porous material according to an embodiment of the present invention.

FIG. 2A is a schematic explanatory view of a wire mesh laminated porous material included in pipes containing a porous material according to an embodiment of the present invention and is a cross-sectional view taken along a lamination direction of a wire mesh.

FIG. 2B is a schematic explanatory view of a wire mesh laminated porous material included in pipes containing a porous material according to an embodiment of the present invention and is a plan view of laminated wire meshes seen in a lamination direction.

FIG. 3 is a schematic explanatory view of a wire mesh configuring a wire mesh laminated porous material according to an embodiment of the present invention.

FIG. 4 is an explanatory view showing a rotation angle between wire meshes adjacent to each other in a lamination direction in a wire mesh laminated porous material according to an embodiment of the present invention.

[Description of Embodiments]

Hereinafter, a wire mesh laminated porous material and pipes containing a porous material according to an embodiment of the present invention will be described with reference to the accompanying drawings.

The embodiments shown below are specifically described for better understanding of the gist of the invention, and do not limit the present invention unless otherwise specified.

The wire mesh laminated porous material and the pipes containing a porous material according to the present embodiment are used as, for example, a heat exchanger.

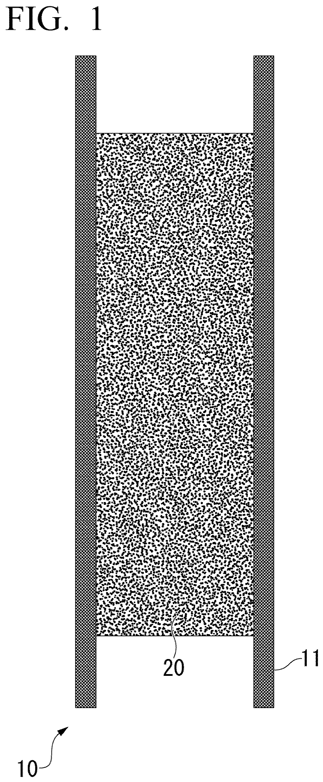

As shown in FIG. 1, a pipe 10 containing a porous material according to the present embodiment includes a pipe body 11, and a wire mesh laminated porous material 20 according to the present embodiment disposed inside the pipe body 11.

Here, in the present embodiment, as shown in FIG. 1, the wire mesh laminated porous material 20 is filled in the pipe body 11, and an outer peripheral surface of the wire mesh laminated porous material 20 and an inner peripheral surface of the pipe body 11 are bonded to each other.

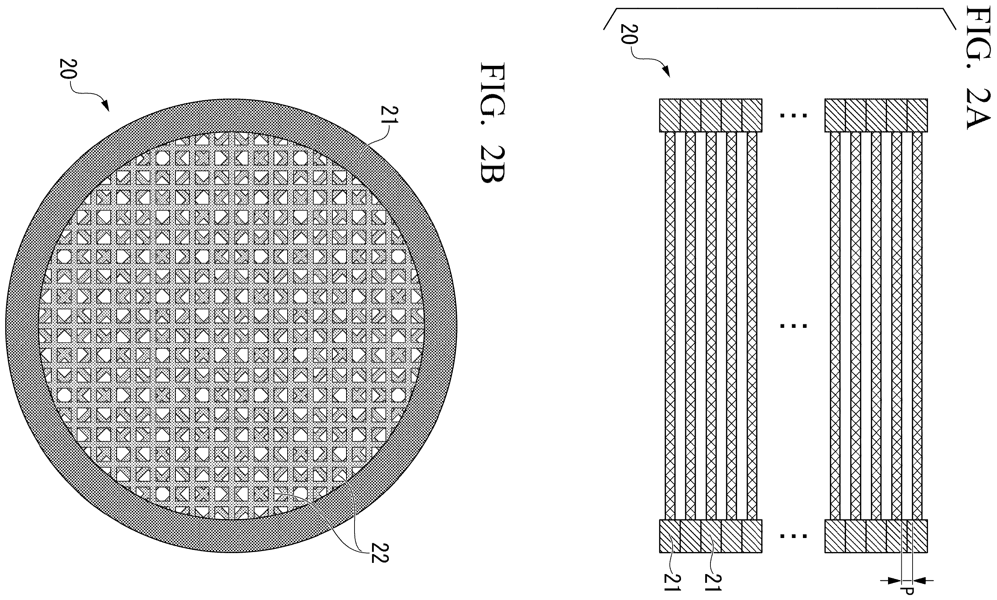

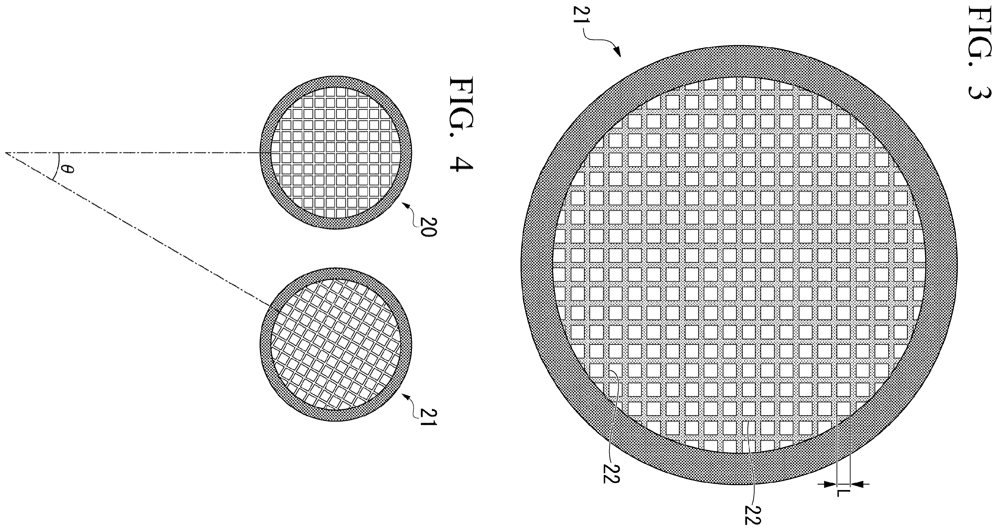

In the wire mesh laminated porous material 20 according to the present embodiment, as shown in FIG. 2(a), wire meshes 21, ..., and 21 are provided with an interval in between, each of apertures and line diameters of the wire meshes being identical therebetween, and the wire meshes 21 and 21 adjacent to each other in a lamination direction are relatively rotated and laminated. As shown in FIG. 3, in one wire mesh 21, a plurality of wire mesh lines 22 are woven with an interval in between. In addition, a relationship between a rotation angle θ between the adjacent wire meshes 21 and 21 and the wire mesh structure is shown in FIG. 4.

Although not particularly limited, the interval of the wire mesh lines 22 may be a constant interval. The wire mesh lines 22 and 22 woven in one wire mesh 21 may cross each other at approximately 90°. A shape of an apertures of the wire meshes 22 may be substantially a square.

Depending on a size of the rotation angle θ, it is possible to manufacture wire mesh laminated porous material with different laminating methods. At this time, as shown in FIG. 2(b), in a case where the wire mesh lines 22 of the plurality of wire meshes 21 in the wire mesh laminated porous material 20 are projected onto a projection surface orthogonal to the lamination direction, a difference of the wire mesh laminated porous material due to a difference of the laminating methods can be expressed by a proportion of a projection area of the wire mesh lines 22 of the plurality of wire meshes 21 occupying the projection surface.

Here, in the pipe 10 containing a porous material according to the present embodiment, the wire mesh laminated porous material 20 is disposed so that the wire meshes are laminated in an extension direction of the pipe body 11.

Therefore, in the pipe 10 containing a porous material according to the present embodiment, when seen in the extension direction of the pipe body 11, the difference of the methods of laminating the wire meshes is numerically evaluated with a proportion of the wire mesh lines 22 of the plurality of wire meshes 21 occupying an opening surface of the pipe body 11.

In a case where the rotation angle θ is set so that the proportion of the wire mesh lines 22 of the plurality of wire meshes 21 occupying the opening surface of the pipe body 11 increases, a fluid (a liquid or a gas) flowing through an inside of the pipe body 11 efficiently collides with the wire mesh lines 22 of the wire meshes 21, and a high heat transfer rate is obtained. On the other hand, the collisions frequency with the wire mesh lines 22 increases, and a pressure loss also increases due to branching or frictional loss of a fluid flow accompanied by the collision with the wire mesh lines 22.

On the other hand, in a case where the rotation angle θ is set so that the proportion of the wire mesh lines 22 of the plurality of wire meshes 21 occupying the opening surface of the pipe body 11 decreases, a fluid (a liquid or a gas) flowing through an inside of the pipe body 11 is less likely to collide with the wire mesh lines 22 of the wire meshes 21, and a low pressure loss and a low heat transfer rate are obtained.

As shown in FIG. 3, in the wire meshes 21 configuring the wire mesh laminated porous material 20 according to the present embodiment, the plurality of wire mesh lines 22 are woven with an interval in between, and opening lengths L of apertures of the wire meshes 21 are set in a range of 0.5 mm or more and 0.7 mm or less.

In the present embodiment, as shown in FIG. 3, a square opening part is formed by the plurality of wire mesh lines 22, and the opening lengths L of the apertures of the wire meshes 21 are set as a length of one side of a square formed by the opening part.

Here, the square shape of the opening part is merely an example, and the opening part may be rectangular or polygonal. In this case, a hydraulic equivalent diameter calculated by the shape is preferably defined and used as the opening lengths L. For example, the hydraulic equivalent diameter $C = (2ab)/(a + b)$ of a rectangle having a long side "a" and a short side "b" is set as the opening lengths L.

In a case where the opening lengths L of the apertures of the wire meshes 21 are set to 0.5 mm or more, a flowing path is ensured. Accordingly, it is possible to reliably suppress an excessive increase of a pressure loss of a fluid flowing through the inside of the pipe body 11. On the other hand, in a case where the opening lengths L of the apertures of the wire meshes 21 are set to 0.7 mm or less, a flowing path is ensured while maintaining excellent heat conduction between a fluid flowing through and a wire mesh line, and the collisions frequency with the wire mesh lines is less likely to be excessively changed depending on the laminating method. Therefore, it is possible to make thermal performance determined by the pressure loss and the heat transfer rate not fluctuate depending on the laminating method.

In addition, in the wire mesh laminated porous material 20 according to the present embodiment, as shown in FIG. 2(a), an interval P between the wire meshes 21 and 21 adjacent to each other in the lamination direction is preferably in a range of 0.2 mm or more and 1.1 mm or less.

In a case where the interval P between the wire meshes 21 and 21 adjacent to each other in the lamination direction is 0.2 mm or more, the fluid flowing through is rectified between the wire mesh and the wire mesh, and a flow becomes uniform. Therefore, further improvement of heat exchange performance can be realized. On the other hand, in a case where the interval P between the wire meshes 21 and 21 adjacent to each other in the lamination direction is 1.1 mm or less, an increase of a lamination length is suppressed, and the wire mesh laminated porous material 20 can be reduced in size.

Here, in order to realize weight reduction and size reduction, and reliably achieve a flow-straightening effect of the fluid, the interval P between the wire meshes 21 and 21 adjacent to each other in the lamination direction is preferably set in a range of 0.5 mm or more and 0.6 or less.

In the wire mesh laminated porous material 20 according to the present embodiment, it is possible to manufacture a wire mesh laminated porous material having different proportions of the wire mesh lines 22 of the plurality of wire meshes 21 occupying the opening surface of the pipe body 11 depending on the size of the rotation angle θ between the wire meshes 21 and 21 adjacent to each to other in the lamination direction. The rotation angle θ is not limited to an upper limit and a lower limit.

When the rotation angle θ is extremely small, it is difficult to control the rotation angle at the time of laminating the plurality of wire meshes 21. On the other hand, regarding the upper limit of the rotation angle θ, in consideration that an angle has periodicity from 0° to 360° and the rotation angle θ shows symmetry of the wire mesh lines 22 configuring the wire mesh 21, the rotation angle θ may be set from the desired number of wire meshes to be laminated and the length of the pipe body 11, so that the proportion of the wire mesh lines 22 of the plurality of wire meshes 21 occupying the opening surface of the pipe body 11 can be changed. For example, the wire mesh lines 22 of the wire mesh 21 shown in FIG. 3 is an example having rotational symmetry of θ = 90°.

In consideration of the above, the rotation angle θ for changing the proportion of the wire mesh lines 22 of the plurality of wire meshes 21 occupying the opening surface of the pipe body 11 is not particularly limited, and is preferably set in a range of 10° or more and 60° or less.

In addition, the line diameter of the wire mesh line 22 is not particularly limited, and is preferably set in a range of 0.1 mm or more and 0.5 mm or less.

Furthermore, in the present embodiment, a material configuring the pipe body 11 and the wire mesh 20 is not particularly limited, and may be suitably selected according to the purpose.

For example, in a case of being used as a heat exchanger, the pipe body and the wire mesh may be configured with a metal having high heat conduction (for example, copper or a copper alloy, or aluminum or an aluminum alloy), or the like. In addition, for the purpose requiring corrosion resistance, the pipe body and the wire mesh are preferably configured with a stainless steel alloy, titanium, a titanium alloy, or the like.

The wire mesh laminated porous material 20 according to the present embodiment is manufactured by laminating the plurality of wire meshes 21. A method for fixing the laminated wire meshes 21 is not particularly limited, and it is preferable to use existing methods according to the purpose and the material. In addition, in order to adjust the interval P between the adjacent wire meshes 21 and 21, the lamination may be performed by disposing a spacer between the wire mesh and the wire mesh.

Furthermore, in recent years, since a 3D printing or additive manufacturing technology has been developed, the wire mesh laminated porous material 20 having a structure in which wire meshes are laminated may be molded by a 3D printer.

According to the wire mesh laminated porous material 20 and the pipes containing a porous material according to the present embodiment having the above configuration, even in a case where the method for laminating the wire meshes is changed when laminating the wire meshes, the opening lengths L of the apertures of the wire meshes 21 are set in a range of 0.5 mm or more and 0.7 mm or less. Accordingly, a flowing path is ensured while maintaining excellent heat conduction between a fluid flowing through and a wire mesh line, and the collisions frequency with the wire mesh lines is less likely to be excessively changed depending on the laminating method. Therefore, by causing a fluid to flow to the pipe body, a high heat transfer rate and a low pressure loss can be obtained, and it is possible to make thermal performance determined by the pressure loss and the heat transfer rate not fluctuate according to a difference of the laminating method.

In addition, since the wire meshes 22 are provided with an interval in between, and the wire meshes adjacent to each other in the lamination direction are relatively rotated and laminated, it is possible to comparatively easily manufacture the wire mesh laminated porous material 20 according to the present embodiment.

In the present embodiment, in a case where the interval between the wire meshes 21 and 21 adjacent to each other in the lamination direction is set in a range of 0.5 mm or more and 0.6 mm or less, it is possible to realize size reduction of the wire mesh laminated porous material 20, reliably achieve a flow-straightening effect of a fluid, and make the flow of the fluid more uniform.

Hereinabove, the embodiment of the present invention has been described. However, the present invention is not limited thereto and can be suitably modified without departing from the technical idea of the invention.

[Examples]

Hereinafter, results of experiments for confirmation performed to confirm the effects of the present invention will be described.

First, a cylinder (inner diameter: 18 mm, outer diameter: 21 mm, and length: 25 mm) formed of aluminum (A1050) was prepared as a pipe body.

The inside of this pipe body was filled with a wire mesh laminated porous material formed of wire meshes (formed of aluminum (A1050)) shown in Table 1, and the pipe body and the wire mesh laminated porous material were bonded by sintering.

Here, the wire mesh laminated porous material was disposed such that a porosity inside pipes containing a porous material was set to 80% or more.

A temperature of an outer wall face of the pipes containing a porous material was set to 0°C, air at 200°C was allowed to flow into the pipes containing a porous material, and a pressure loss amount and a heat transfer rate in the pipes containing a porous material were measured.

A friction factor f was calculated from the pressure loss amount and a Nusselt number Nu was calculated from the heat transfer rate, and a thermal performance factor (TPF) defined by the following equation was evaluated. When the TPF is high, the pressure loss amount is low and excellent heat exchange performance is obtained.

$$\mathrm{TPF = Nu/f^{1/3}}$$

The rotation angle $\theta$ of the wire mesh was changed under the conditions of the identical opening lengths of apertures, a wire mesh laminated porous material having different projection area proportions was manufactured, and an average value Ave and a standard deviation Std of TPFs under the conditions of the identical opening lengths of apertures were calculated to obtain a variation index $\sigma$ of the thermal performance factor due to a difference of the laminating method shown by the following equation.

$$\sigma = \mathrm{Std/Ave}$$

When $\sigma$ is small, it is an index indicating that a variation in thermal performance with respect to the laminating method is small. The opening lengths of apertures conditions, in which the average value Ave of TPFs is large and the variation index $\sigma$ in the thermal performance factor is small, were determined as conditions in which a high heat transfer rate and a low pressure loss can be obtained, and it is possible to make thermal performance determined by the pressure loss and the heat transfer rate not fluctuate according to a difference of the laminating method.

[Table 1]

| | | Opening length of aperture [mm] | Rotation angle of wire mesh [°] | Lamination interval of wire meshes [mm] | Proportion of projection area [%] | Evaluation | | | | | |
|---|---|---|---|---|---|---|---|---|---|---|---|
| | | | | | | Pressure loss [kPa/mm] | Heat transfer rate [W/(m²·K)] | TPF | TPF in case of the same aperture and opening length | | |
| | | | | | | | | | Average value | Standard deviation | σ |
| Examples of present invention | 1 | 0.7 | 0 | 0.5 | 50.44 | $3.851 \times 10^{-3}$ | $2.804 \times 10^3$ | 649.9 | 656.1 | 5.047 | 7.691E-03 |
| | 2 | 0.7 | 10 | 0.5 | 99.79 | $9.348 \times 10^{-3}$ | $3.734 \times 10^3$ | 656.9 | | | |
| | 3 | 0.7 | 30 | 0.5 | 90.84 | $9.742 \times 10^{-3}$ | $3.802 \times 10^3$ | 660.3 | | | |
| | 4 | 0.7 | 45 | 0.5 | 75.63 | $7.958 \times 10^{-3}$ | $3.523 \times 10^3$ | 652.1 | | | |
| | 5 | 0.7 | 60 | 0.5 | 90.84 | $9.729 \times 10^{-3}$ | $3.807 \times 10^3$ | 661.5 | | | |
| | 6 | 0.5 | 0 | 0.6 | 61.17 | $9.509 \times 10^{-3}$ | $4.063 \times 10^3$ | 713.0 | 692.1 | 11.797 | 1.705E-02 |
| | 7 | 0.5 | 10 | 0.6 | 100.00 | $1.859 \times 10^{-2}$ | $4.837 \times 10^3$ | 684.2 | | | |
| | 8 | 0.5 | 30 | 0.6 | 96.33 | $1.880 \times 10^{-2}$ | $4.880 \times 10^3$ | 688.1 | | | |
| | 9 | 0.5 | 45 | 0.6 | 84.89 | $1.720 \times 10^{-2}$ | $4.739 \times 10^3$ | 687.4 | | | |
| | 10 | 0.5 | 60 | 0.6 | 96.33 | $1.881 \times 10^{-2}$ | $4.878 \times 10^3$ | 687.7 | | | |

[Table 2]

| | | Opening length of aperture [mm] | Rotation angle of wire mesh [°] | Lamination interval of wire meshes [mm] | Proportion of projection area [%] | Evaluation | | | | | |
|---|---|---|---|---|---|---|---|---|---|---|---|
| | | | | | | Pressure loss [kPa/mm] | Heat transfer rate [w/(m²·K)] | TPF | TPF in case of the same aperture and opening length | | |
| | | | | | | | | | Average value | Standard deviation | σ |
| Comparative Example | 1 | 0.9 | 0 | 0.4 | 43.98 | $2.223 \times 10^{-3}$ | $2.099 \times 10^{3}$ | 572.6 | 647.9 | 43.992 | 6.790E-02 |
| | 2 | 0.9 | 10 | 0.4 | 99.37 | $7.622 \times 10^{-3}$ | $3.600 \times 10^{3}$ | 674.0 | | | |
| | 3 | 0.9 | 30 | 0.4 | 85.01 | $7.760 \times 10^{-3}$ | $3.623 \times 10^{3}$ | 674.4 | | | |
| | 4 | 0.9 | 45 | 0.4 | 68.94 | $5.657 \times 10^{-3}$ | $3.139 \times 10^{3}$ | 644.5 | | | |
| | 5 | 0.9 | 60 | 0.4 | 85.01 | $7.762 \times 10^{-3}$ | $3.622 \times 10^{3}$ | 673.9 | | | |
| | 6 | 1.2 | 0 | 0.2 | 35.76 | $1.204 \times 10^{-3}$ | $1.515 \times 10^{3}$ | 495.0 | 715.2 | 126.996 | 1.776E-01 |
| | 7 | 1.2 | 10 | 0.2 | 100.00 | $8.971 \times 10^{-3}$ | $4.355 \times 10^{3}$ | 780.6 | | | |
| | 8 | 1.2 | 30 | 0.2 | 97.44 | $8.439 \times 10^{-3}$ | $4.341 \times 10^{3}$ | 793.8 | | | |
| | 9 | 1.2 | 45 | 0.2 | 86.58 | $8.494 \times 10^{-3}$ | $4.329 \times 10^{3}$ | 789.8 | | | |
| | 10 | 1.2 | 60 | 0.2 | 74.45 | $6.423 \times 10^{-3}$ | $3.611 \times 10^{3}$ | 717.0 | | | |
| | 11 | 0.1 | 0 | 1.1 | 93.79 | $8.131 \times 10^{-1}$ | $5.260 \times 10^{3}$ | 212.6 | 212.6 | 0.152 | 7.135E-04 |
| | 12 | 0.1 | 10 | 1.1 | 100.00 | $8.132 \times 10^{-1}$ | $5.261 \times 10^{3}$ | 212.7 | | | |
| | 13 | 0.1 | 30 | 1.1 | 100.00 | $8.147 \times 10^{-1}$ | $5.258 \times 10^{3}$ | 212.4 | | | |
| | 14 | 0.1 | 45 | 1.1 | 99.61 | $8.160 \times 10^{-1}$ | $5.261 \times 10^{3}$ | 212.4 | | | |
| | 15 | 0.1 | 60 | 1.1 | 100.00 | $8.146 \times 10^{-1}$ | $5.265 \times 10^{3}$ | 212.7 | | | |
| | 16 | 0.3 | 0 | 0.8 | 74.91 | $3.726 \times 10^{-2}$ | $4.838 \times 10^{3}$ | 543.6 | 527.0 | 9.318 | 1.768E-02 |
| | 17 | 0.3 | 10 | 0.8 | 100.00 | $4.614 \times 10^{-2}$ | $4.988 \times 10^{3}$ | 522.6 | | | |
| | 18 | 0.3 | 30 | 0.8 | 99.60 | $4.648 \times 10^{-2}$ | $5.003 \times 10^{3}$ | 522.9 | | | |
| | 19 | 0.3 | 45 | 0.8 | 93.71 | $4.606 \times 10^{-2}$ | $4.995 \times 10^{3}$ | 523.6 | | | |
| | 20 | 0.3 | 60 | 0.8 | 99.60 | $4.684 \times 10^{-2}$ | $5.008 \times 10^{3}$ | 522.1 | | | |

Comparative Examples 1 to 5 show results of performance of wire mesh laminated porous materials in which the opening lengths of the apertures of the wire meshes are as large as 0.9 mm, in a case where the laminating method is changed.

The TPF varied depending on the method for laminating the wire meshes, and the variation index $\sigma$ of the thermal performance factor due to the difference of the laminating method increased.

Comparative Examples 6 to 10 show results of performance of wire mesh laminated porous materials, in which the opening lengths of the apertures of the wire meshes are as large as 1.2 mm, in a case where the laminating method is changed. There is also a laminating method that exhibits a high TPF, however, it was shown that the TPF varies greatly depending on the laminating method, and the variation index $\sigma$ of the thermal performance factor increased.

Comparative Examples 11 to 15 show results of performance of wire mesh laminated porous materials, in which the opening lengths of the apertures of the wire meshes are as small as 0.1 mm, in a case where the laminating method is changed. Although the variation index $\sigma$ of the thermal performance factor due to the difference of the laminating method is sufficiently low, the average value of TPF is extremely small. Therefore, the thermal performance was stable with an extremely low value regardless of the laminating method.

Comparative Examples 16 to 20 show results of performance of wire mesh laminated porous materials, in which the opening lengths of the apertures of the wire meshes are as small as 0.3 mm, in a case where the laminating method is changed. The variation of the TPF depending on the laminating method is small, and the variation index $\sigma$ of the thermal performance factor due to the difference of the laminating method is sufficiently low, but the average value of TPFs is small. Therefore, the thermal performance was stable with a low value regardless of the laminating method.

In contrast, in Examples 1 to 15 of the present invention, it is shown that the opening lengths of the apertures of the wire meshes are in a range of 0.5 mm or more and 0.7 mm or less, the variation index $\sigma$ of the thermal performance factor due to the difference of the laminating method is low, and the average value of the TPFs is large.

From the above, according to the examples of the present invention, it was confirmed that it is possible to provide a wire mesh laminated porous material which shows a high heat transfer rate and a low pressure loss even in a case where a method for laminating wire meshes is changed when laminating the wire meshes, and does not cause a fluctuation in thermal performance determined by the pressure loss and the heat transfer rate, and pipes containing a porous material.

[Industrial Applicability]

It is possible to provide a wire mesh laminated porous material which shows a high heat transfer rate and a low pressure loss even in a case where a method for laminating wire meshes is changed when laminating the wire meshes, and in which a fluctuation in thermal performance determined by the pressure loss and the heat transfer rate does not occur due to a difference of the laminating method, and pipes containing a porous material.

[Reference Signs List]

10: Pipes containing porous material
11: Pipe body
20: Wire mesh laminated porous material
21: Wire mesh
22: Wire mesh line

**Claims**

1. A wire mesh laminated porous material,

   wherein a plurality of wire meshes are provided with an interval in between, each of apertures and line diameters of the wire meshes being identical therebetween, wire meshes adjacent to each other in a lamination direction are relatively rotated and laminated, and
   opening lengths of the apertures of the wire meshes being set in a range of 0.5 mm or more and 0.7 mm or less.

2. The wire mesh laminated porous material according to Claim 1,
   wherein the interval between the wire meshes adjacent to each other in the lamination direction is in a range of 0.5 mm or more and 0.6 mm or less.

3. Pipes containing a porous material,

> wherein the wire mesh laminated porous material according to Claim 1 or 2 is disposed inside a pipe body, and the wire mesh laminated porous material is disposed so that the wire meshes are laminated in an extension direction of the pipe body.

FIG. 1

## FIG. 2A

## FIG. 2B

# FIG. 3

# FIG. 4

## INTERNATIONAL SEARCH REPORT

| International application No. |
|---|
| **PCT/JP2023/024483** |

**A. CLASSIFICATION OF SUBJECT MATTER**

***F28F 1/40***(2006.01)i; ***F28F 13/02***(2006.01)i; ***F28D 20/00***(2006.01)i
FI: F28F1/40 Q; F28D20/00 A; F28F13/02 D

According to International Patent Classification (IPC) or to both national classification and IPC

**B. FIELDS SEARCHED**

Minimum documentation searched (classification system followed by classification symbols)

F28F1/40; F28F13/02; F28D20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 1-244285 A (AISIN SEIKI KABUSHIKI KAISHA) 28 September 1989 (1989-09-28) p. 1, lower left column, line 14 to p. 2, lower right column, line 14, fig. 1-4 | 1-3 |
| Y | JP 49-21330 B1 (N.V. PHILIPS' GLOEILAMPENFABRIEKEN) 31 May 1974 (1974-05-31) p. 1, left column, line 29 to p. 3, right column, line 37, fig. 1a-6 | 1-3 |
| Y | JP 62-233688 A (AISIN SEIKI KABUSHIKI KAISHA) 14 October 1987 (1987-10-14) p. 1, lower left column, line 10 to p. 2, lower right column, line 13, fig. 1-6 | 1-3 |
| A | JP 8-247671 A (NKK CORP.) 27 September 1996 (1996-09-27) paragraphs [0001]-[0027], fig. 1-5 | 1-3 |
| A | JP 2016-22433 A (RINNAI KABUSHIKI KAISHA) 08 February 2016 (2016-02-08) paragraphs [0001]-[0039], fig. 1-4 | 1-3 |
| A | JP 2005-138083 A (SAKAGUCHI, Tadao) 02 June 2005 (2005-06-02) paragraphs [0001]-[0047], fig. 1-10 | 1-3 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024483**

| Patent document cited in search report | | | Publication date (day/month/year) | Patent family member(s) | | | Publication date (day/month/year) |
|---|---|---|---|---|---|---|---|
| JP | 1-244285 | A | 28 September 1989 | (Family: none) | | | |
| JP | 49-21330 | B1 | 31 May 1974 | US | 3742578 | A | |
| | | | | column 1, line 8 to column 5, line 37, fig. 1a-6 | | | |
| | | | | GB | 1277773 | A | |
| | | | | DE | 1937414 | A | |
| | | | | FR | 2015704 | A | |
| | | | | BE | 737461 | A | |
| | | | | CH | 510243 | A | |
| | | | | NL | 6811589 | A | |
| | | | | AT | 296691 | B | |
| | | | | SE | 351719 | B | |
| | | | | FI | 53871 | B | |
| | | | | DK | 127607 | B | |
| JP | 62-233688 | A | 14 October 1987 | (Family: none) | | | |
| JP | 8-247671 | A | 27 September 1996 | (Family: none) | | | |
| JP | 2016-22433 | A | 08 February 2016 | (Family: none) | | | |
| JP | 2005-138083 | A | 02 June 2005 | (Family: none) | | | |

Form PCT/ISA/210 (patent family annex) (January 2015)

**EP 4 664 050 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023016693 A
- JP 2002349981 A
- JP 2005030704 A
- JP 2011149601 A
- JP 2014228171 A